# EUROPEAN PATENT SPECIFICATION

(11) **EP 1 110 175 B1**
(45) Date of publication and mention of the grant of the patent: **12.06.2002**
(21) Application number: 99941877.5
(22) Date of filing: 31.08.1999
(51) Int. Cl.: G06K 19/077

(54) **INTEGRATED CIRCUIT WITH ELECTRICAL CONTACT**
INTEGRIERTE SCHALTUNG MIT ELEKTRISCHEM KONTAKT
CIRCUIT INTEGRE AVEC CONTACT ELECTRIQUE

(30) Priority: 31.08.1998 NL 1009976
(43) Date of publication of application: 27.06.2001
(73) Proprietor: Chess Engineering B.V., 2011 NC Haarlem (NL)
(72) Inventor: VAN DER WATEREN, Frits, NL-2014 AM Haarlem (NL)
(74) Representative: Visser-Luirink, Gesina, Dr.
(86) International application number: NL9900539
(87) International publication number: WO0013140

(56) References cited:
- EP-A- 0 471 149
- EP-A- 0 751 478
- FR-A- 2 740 582
- US-A- 4 658 264
- NAKATSUGAWA M.: 'LINE-LOSS AND SIZE REDUCTION TECHNIQUES FOR MILLIMETER-WAVE RF FRONT-END BOARDS BY USING A POLYIMIDE/ALUMINA-CERAMIC MULTILAYER CONFIGURATION' IEEE TRANSACTIONS ON MICROWAVE THEORY AND TECHNIQUES vol. 45, no. 12, 01 December 1997, pages 2308 - 2315, XP000732014

## Description

The invention relates to an assembly of at least one integrated circuit and an electrical contact connected to the circuit, wherein both the circuit and the electrical contact are mounted on a film carrier and are mutually connected, at least in part, by means of conducting tracks which run over the film carrier.

In a prior art assembly of an integrated circuit and an electrical contact, the integrated circuit generally connects to the electrical contact using contact wires. Such a connection can be embodied in reliable manner. A drawback however is that a thus manufactured assembly of integrated circuit and electrical contact is relatively voluminous.

Space may be saved using a film carrier as a support for the contact and the integrated circuit and by stacking several film carrier parts, while interconnecting the different levels. Such an assembly, of the type described in the opening paragraph, is for instance known from French patent application FR 2.740.582 and "IEEE Transactions, Microwave Theory and Techniques, Vol. 45, No. 12, Dec. 1997, p. 2308-2315" by M. Nakatsugawa et al. These documents describe several film carrier levels which are stacked while carrying several electrical components including an integrated circuit and an electrical contact. An assembly of this kind. however, has a drawback that a relatively high accuracy is necessary while the different levels are aligned and stacked in order to guarantee reliable interconnections and to avoid short cuts.

The present invention has for its object to provide an assembly of at least one integrated circuit and an electrical contact which can take a compact, in particular thin form. It is also an object to enable combining of discrete elements by means of the assembly. It is an additional object to enable relatively inexpensive manufacture of such an assembly. These objects are attained by an assembly as disclosed in claim 1.

This assembly according to claim 1 is characterized in that the integrated circuit and the electrical contact are mounted on the same film carrier and in that the film carrier is folded so that it comprises stacked film carrier parts carrying the integrated circuit and the electrical contact respectively. The fold line in the film layer is herein preferably located between the integrated circuit and the electrical contact. This very advantageous embodiment consists of only one film carrier, whereby particularly manufacture of the assembly is considerably simplified. It is thus no longer necessary for instance to position the individual film carriers relative to each other; when the film carrier is folded at the correct position, the film carrier parts are simultaneously positioned relative to each other. Assembly is hereby relatively simple and there is no chance of errors.

It is also possible to connect discrete elements such as for instance capacitors, resistors etc. to the track pattern of the film carrier. Such film carriers are also called connecting tape and are marketed for instance as "interconnect tape" under the trade name 3M. An electrical circuit can be adhered fixedly to the film carrier, where after protruding track parts of the film carrier are urged against the circuit and connected thereto. The use of the film carrier to support at least one circuit and electrical contact as well as possible discrete elements has the significant advantage that due to the limited thickness of the film carrier the assembly can also take a very thin form. The thickness of a film carrier, including the conducting tracks arranged thereon, for instance of copper, is in the order of magnitude of 80 µ. The contact can also be embodied in the form of tracks arranged on the film carrier. Depending on the applied construction, one or more recesses can be arranged for this purpose in the film carrier so that the contact is accessible from the side of the film carrier which is not covered with electrically conducting tracks. An important advantage hereof is that very inexpensive manufacture is possible in this manner. The uses of an assembly according to the invention are numerous; it is thus conceivable for the assembly to be applied in a card ("smart card"), a SIM or DIM memory module and so on.

Between the stacked film layers an insulating layer is preferably arranged over at least a part. Such an insulating layer prevents undesirable contact between conducting parts of the two stacked film carriers, this being a prerequisite for good operation of the assembly. The insulation can for instance be arranged in the form of a lacquer layer applied to one or both film carriers. It is also possible to place a separate insulating layer between the film carriers.

In a preferred embodiment a shield layer manufactured from an electrically conducting material is arranged between the stacked film carriers over at least apart. Such a shield layer can consist for instance of an aluminium foil layer. Such a shield layer forms an additional protection against unintended external influence on the assembly, since the possibilities of circuit testing or control of the assembly can hereby be limited. It is possible to place such a shield layer between the film carriers using an adhesive. An aluminium foil layer can thus take an adhesive form on both sides. An additional advantage of the shield layer for extra protection is that when the film carriers are mutually separated the chance of damage is so great that the protection cannot be bypassed in this way either.

The film layer of an assembly constructed from a single film carrier is preferably provided with conducting tracks coupling the circuit and the contact. In addition, the film layer can be provided with mechanically weakened portions at the position of the fold line. The conducting tracks already provide an electrical connection between a circuit and contact prior to folding of the film carrier. The connection is also maintained after folding, so that no special measures have to be taken to realize the desired electrical connection. In order to now ensure that the fold line is arranged at the desired position, it is recommended to provide the film carrier with mechanically weakened portions. This is possible for instance by etching away a material strip, or parts thereof, or by arranging continuous openings in the film carrier. In addition to a precise position determination of the fold line, this also results in the advantage that the fold can take a less bulky form. This in turn also results in a thinner construction of the assembly.

In another preferred embodiment of the assembly, electrically conducting tracks of the stacked separate film layers run through from the one layer to the other, wherein these tracks are folded during stacking of the film carriers. Also in this preferred embodiment the contact, circuit and possible discrete elements are already electrically connected before stacking of the film carriers. The separate film carriers are already mutually connected by means of the continuous tracks. Prior to stacking the two separate film carriers have to be placed one on top of the other, wherein the tracks are simultaneously folded double. This stacking must take place with the requisite caution. It is also unnecessary in this preferred embodiment to take complex measures during stacking in order to couple contact and circuit.

In yet another preferred embodiment an electrically conducting connection is formed between the stacked film layers at least at one position by an electrically conducting adhesive. If no electrical connections already exist between contact and circuit prior to stacking of the film layers, these must be realized during stacking. This is possible for instance by mutually connecting the stacked film carriers at one or more positions by means of an electrically conducting adhesive. This adhesive then provides signal transfer from the one film carrier to the other film carrier.

The electrical contact preferably consists of a number of, for instance 6 or 8, conducting contact surfaces. Such an electrical contact is standardized in accordance with ISO 7816-2. The for instance gold-coated contact surfaces of the contact are generally used, for instance in cards.

In a final preferred embodiment the assembly is combined with a carrier. Since the assembly generally has a limited rigidity which is not uniformly distributed and must usually be protected against mechanical damage, the assembly can be combined with a housing. The form of the housing can be varied subject to the application of the assembly. An advantageous application of the assembly is as chip card wherein only a very limited space is available for the electronics required.

The present invention will be elucidated with reference to the non-limitative embodiments shown in the following figures. Herein:
- fig. 1a: shows a perspective view of an assembly as an illustrating example prior to construction,
- fig. 1b: shows a cross-section of the assembly shown in fig. 1a in a partly assembled state,
- fig. 1c: shows a cross-section through the assembly shown in fig. 1a and 1b in a fully assembled state,
- fig. 2a: is a perspective view of an assembly embodied according to the invention in a non-assembled state,
- fig. 2b: shows a cross-section through the assembly shown in fig. 2a in partly assembled state with an added shield layer, and
- fig. 2c: shows a cross-section through the assembly as shown in fig. 2b in a fully assembled state.

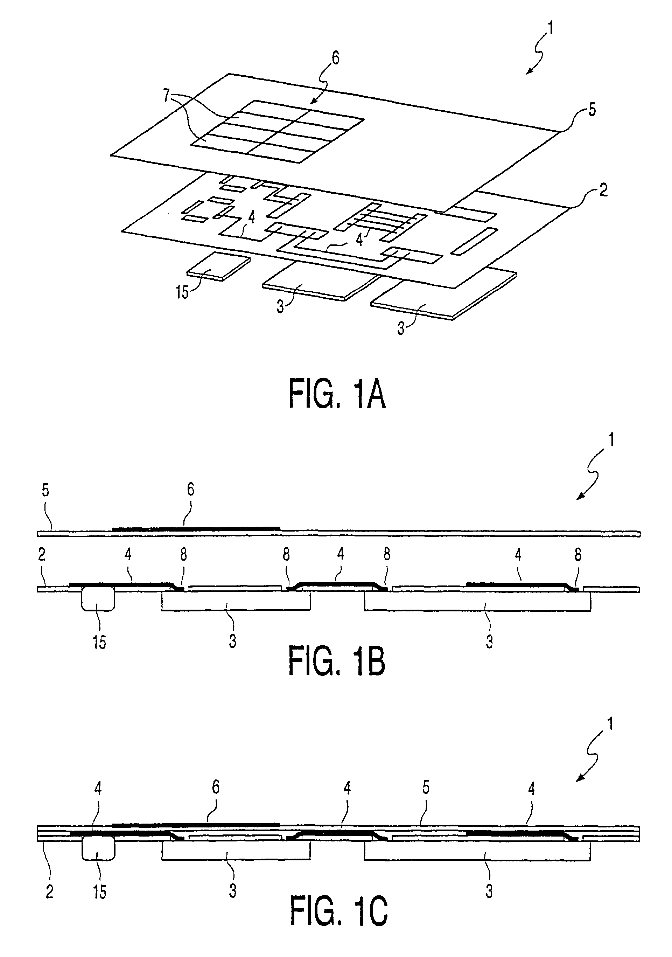

Fig. 1a shows an assembly 1 as an illustrating example in non-assembled state. Assembly 1 consists of a first film carrier 2 for carrying a number of integrated circuits 3 and a discrete element in the form of a capacitor 15. In this figure the circuits 3 and capacitor 15 are not yet connected to film carrier 2. Conducting tracks 4 are arranged on film carrier 2 for connecting circuits 3 and capacitor 15.

Situated above first film carrier 2 is a second film carrier 5 which is provided with an electrical contact which is built up in this case of eight separate contact surfaces 7.

Fig. 1b shows assembly 1 in cross-section in a situation where the integrated circuits 3 and capacitor 15 are fixedly adhered to first film carrier 2. In first film carrier 2 are arranged openings over which tracks 4 protrude. Protruding parts 8 of tracks 4 are then urged against circuits 3 and capacitor 15 and connected thereto. Electrical couplings are thus created between circuits 3, capacitor 15 and tracks 4. The second film carrier 5 is not yet connected to first film carrier 2.

Assembly 1 is shown in fig. 1c in fully assembled state. Second film carrier 5 is herein connected to first film carrier 2, wherein second film carrier 5 lies against the tracks 4 of first film carrier 2. Tracks 4 are hereby electrically insulated simultaneously. Not shown in this figure are the electrical connections which must be arranged between several of the tracks 4 and the contact surfaces 7 of electrical contact 6. Different solutions can be envisaged for this purpose. It is thus possible for instance to arrange recesses in second film carrier 5 at the position of contact surfaces 7 of electrical contact 6. Electrically conducting glue must then be placed in these openings which in the situation of the assembly 1 as shown in figure 1c lies against separate tracks 4. Another option for achieving an electrical connection of electrical contact 6 to tracks 4 is to provide contact surfaces 7 with tracks resembling the tracks 4 on first film carrier 2. These tracks 4 for connecting to contact surfaces 7 can protrude above openings in second film carrier 5 so as to be deformed as described on the basis of the protruding parts 8 of tracks 4 with reference to fig. 1b. Through deformation the tracks can be placed into contact with tracks 4 of first film carrier 2. These bent track portions 8 can then optionally also be shielded by a filler material. Many alternatives can be envisaged by the skilled person in addition to the two described options for coupling electrical contact 6 to tracks 4.

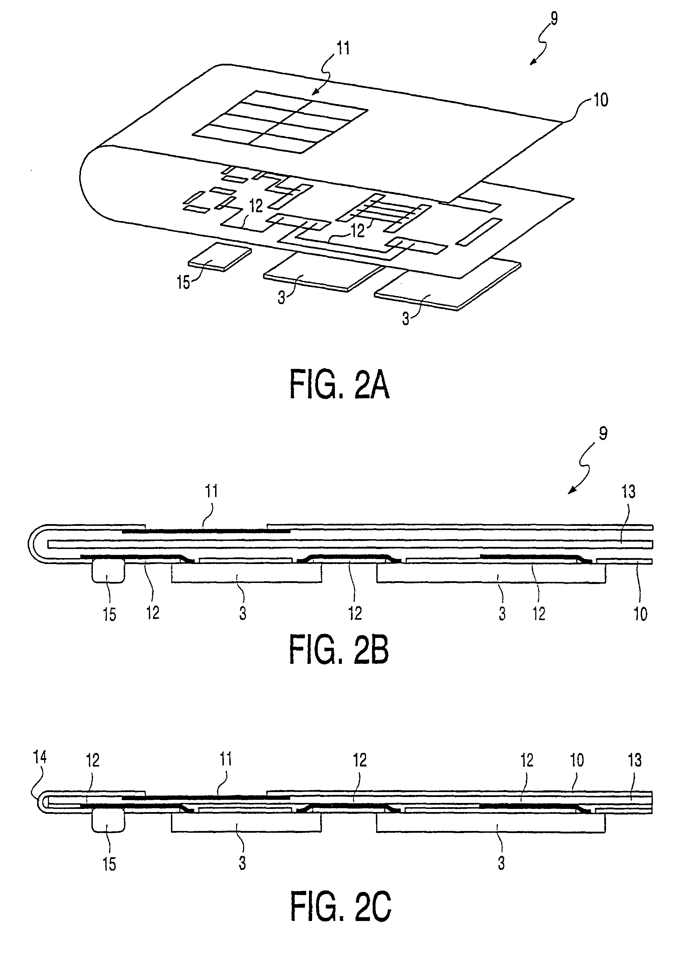

Fig. 2a shows an assembly 9 according to the invention in a non-assembled state which comprises only a single film carrier 10. The single film carrier 10 is pre-folded such that an electrical contact 11 is placed opposite the mounting positions of integrated circuits 3. Conducting tracks 12 are arranged on film carrier 10 in the same production operation as electrical contact 11.

Fig. 2b shows a cross-section of assembly 9 in a situation where circuits 3 are mounted on film carrier 10 as described with reference to fig. 1b. Clearly shown in this figure is that electrical contact 11 lies on the same side of the single film carrier 10 as tracks 12. For the accessibility of contact 11 a recess is arranged in film carrier 10 at the position of contact 11. The contact is hereby accessible from the top as seen in this figure. The advantage of placing electrical contact 11 on the shown side is that electrical contact 11 can be manufactured with tracks 12 in one process run. For good operation of assembly 9 it will be necessary to electrically insulate electrical contact 11 from tracks 12 at a number of positions. For this purpose a lacquer layer (not shown) can for instance be applied over tracks 12 and electrical contact 11. The figure shows an intermediate layer 13 which can be manufactured from an insulating material in order to mutually insulate contact 11 and tracks 12. It is however also possible to embody intermediate layer 13 as a conductive layer and to adhere this on both sides to film carrier 10 with for instance non-conducting glue. The advantage of a conductive intermediate layer 13 is that an additional protection, for instance against unauthorized access, is hereby created in assembly 9.

Finally, fig. 2c shows assembly 9 in a fully assembled state in which intermediate layer 13 is adhered on both sides to film carrier 10, electrical contact 11 and tracks 12. The fold 14 which results herein in film carrier 10 is clearly shown. Otherwise than shown here, this fold 14 can be initiated by giving film carrier 10 a mechanically weakened form at the position of fold 14. Not shown either in this figure are the connections between electrical contact 11 and tracks 12. Reference is made therefor to the figure description of fig. 1b.

Although the invention is elucidated with reference to only a few embodiments, it will be apparent to all that the invention is by no means limited to the described and shown embodiments. On the contrary, many variations are still possible for the skilled person within the scope of the claims.

## Claims

1. Assembly (9) of at least one integrated circuit (3) and an electrical contact (11) connected to the circuit, wherein both the circuit and the electrical contact are mounted on a film carrier (10) and are mutually connected, at least in part, by means of conducting tracks (12) which run over the film carrier **characterized in that** the integrated circuit and the electrical contact are mounted on the same film carrier (10) and **in that** the film carrier is folded so that it comprises stacked film carrier parts carrying the integrated circuit (3) and the electrical contact (11) respectively.

2. Assembly as claimed in claim 1 **characterized in that** an intermediate layer (13) is arranged between the stacked film carrier parts over at least part of the surface.

3. Assembly as claimed in claim 1 or 2 **characterized in that** the film carrier comprises a fold line (14) which is located between the integrated circuit (3) and the electrical contact (11).

4. Assembly as claimed in claim 3 **characterized in that** the film carrier (10) is provided with mechanically weakened portions at the position of the fold line (14).

5. Assembly as claimed in any of the foregoing claims **characterized in that** the electrically conducting tracks (12) run through from the one carrier part to the other and are folded together with the film carrier (10).

6. Assembly as claimed in any of the foregoing claims **characterized in that** an electrically conducting connection is formed between the stacked film carrier parts, at least at one position, by means of an electrically conducting adhesive.

7. Assembly as claimed in any of the foregoing claims, **characterized in that** the electrical contact (11) consists of a number of, for instance 6 or 8, conducting contact surfaces (7).

8. Assembly as claimed in any of the foregoing claims **characterized in that** the assembly is combined with a carrier.

## Patentansprüche

1. Baueinheit (9) mit wenigstens einer integrierten Schaltung (3) und einem mit dieser verbundenen, elektrischen Anschluß (11), wobei sowohl die Schaltung als auch der elektrische Anschluß auf einem Schichtträger (10) angebracht und wenigstens teilweise über auf dem Schichtträger laufende Leiterbahnen (12) miteinander verbunden sind, **dadurch gekennzeichnet, daß** die integrierte Schaltung und der elektrische Anschluß auf demselben Schichtträger (10) angebracht sind und daß der Schichtträger so gefaltet ist, daß er übereinanderliegende Schichtträgerteile enthält, welche die integrierte Schaltung (3) bzw. den elektrischen Anschluß (11) tragen.

2. Baueinheit nach Anspruch 1, **dadurch gekennzeichnet, daß** zwischen die übereinanderliegenden Schichtträgerteile eine Zwischenschicht (13) eingesetzt ist, die auf wenigstens einem Teil der Oberfläche liegt.

3. Baueinheit nach Anspruch 1 oder 2, **dadurch gekennzeichnet, daß** der Schichtträger eine Faltlinie (14) hat, die zwischen der integrierten Schaltung (3) und dem elektrischen Anschluß (11) liegt.

4. Baueinheit nach Anspruch 3, **dadurch gekennzeichnet, daß** der Schichtträger (10) im Bereich der Faltlinie (14) mechanisch geschwächte Zonen hat.

5. Baueinheit nach einem der vorhergehenden Ansprüche, **dadurch gekennzeichnet, daß** die elektrischen Leiterbahnen (12) von einem Schichtträgerteil zum anderen Schichtträgerteil laufen und zusammen mit dem Schichtträger (10) gefaltet sind.

6. Baueinheit nach einem der vorhergehenden Ansprüche, **dadurch gekennzeichnet, daß** zwischen den übereinanderliegenden Schichtträgerteilen an wenistens einer Stelle eine elektrisch leitende Verbindung mittels eines elektrisch leitenden Klebers gebildet ist.

7. Baueinheit nach einem der vorhergehenden Ansprüche, **dadurch gekennzeichnet, daß** der elektrische Anschluß aus einer Anzahl von Kontaktflächen (7) besteht, beispielsweise sechs oder acht Kontaktflächen.

8. Baueinheit nach einem der vorhergehenden Ansprüche, **dadurch gekennzeichnet, daß** die Baueinheit mit einem Träger kombiniert ist.

## Revendications

1. Assemblage (9) d'au moins un circuit intégré (3) et un contact électrique (11) connecté au dit circuit, le circuit et le contact électrique étant tous deux montés sur un film support (10) et connectés mutuellement, au moins en partie, au moyen de pistes conductrices (12) qui s'étendent sur le film support, **caractérisé en ce que** le circuit intégré et le contact électrique sont montés sur le même film support (10) et **en ce que** le film support est plié de sorte qu'il comprend des parties superposées de film support portant respectivement le circuit intégré (3) et le contact électrique (11).

2. Assemblage selon la revendication 1, **caractérisé en ce qu'**une couche intermédiaire (13) est disposée entre les parties superposées de film support sur au moins une partie de la surface.

3. Assemblage selon la revendication 1 ou 2, **caractérisé en ce que** le film support comprend une ligne de pliure (14) qui est localisée entre le circuit intégré (3) et le contact électrique (11).

4. Assemblage selon la revendication 3, **caractérisé en ce que** le film support (10) est pourvu de zones de fragilité mécanique à l'emplacement de la ligne de pliure (14).

5. Assemblage selon l'une quelconque des revendications précédentes, **caractérisé en ce que** les pistes conductrices (12) s'étendent d'une partie de support jusqu'à l'autre et sont pliées avec le film support (10).

6. Assemblage selon l'une quelconque des revendications précédentes, **caractérisé en ce que** une connexion électriquement conductrice est formée entre les parties superposées de film support, au moins en un emplacement, au moyen d'un adhésif électriquement conducteur.

7. Assemblage selon l'une quelconque des revendications précédentes, **caractérisé en ce que** le contact électrique (11) consiste en un nombre, par exemple 6 ou 8, de surfaces de contact conductrices (7).

8. Assemblage selon l'une quelconque des revendications précédentes, **caractérisé en ce que** l'assemblage est combiné à un support.
